# EUROPEAN PATENT SPECIFICATION

(11) **EP 1 374 110 B1**
(45) Date of publication and mention of the grant of the patent: **21.11.2007**
(21) Application number: 01923178.6
(22) Date of filing: 06.04.2001
(51) Int. Cl.: G06Q 10/00

(54) **SALIENCE-SENSITIVE IMAGE-BASED PRESENTATION OF A CONTACT DIRECTORY**
DARSTELLUNG EINES KONTAKTVERZEICHNISSES BASIEREND AUF DEM HERAUSSTELLEN VON BILDERN
PRESENTATION DE REPERTOIRE DE CONTACT A BASE D'IMAGES SENSIBLES A LA PREGNANCE

(43) Date of publication of application: 02.01.2004
(73) Proprietor: Nokia Corporation, 02150 Espoo (FI)
(72) Inventor: KEINONEN, Turkka, FIN-03150 Huhmari (FI); WIKBERG, Harri, FIN-00200 Helsinki (FI); PIIPPO, Petri, FIN-03600 Karkkila (FI); VALTONEN, Anna, FIN-00180 Helsinki (FI)
(74) Representative: Read, Matthew Charles
(86) International application number: PCT/US2001/011123
(87) International publication number: WO 2002/082343

(56) References cited:
- EP-A- 0 653 862
- US-A- 5 778 054
- US-A- 5 793 365
- US-A- 5 812 770
- US-A- 5 923 737

## Description

### BACKGROUND OF THE INVENTION

### Field of the Invention

The present invention relates to contact directories. In particular, the invention relates to a contact directory that contains images representing the individuals included in the directory.

### Description Of Related Art

Typical contact directories include an alphabetical listing of entries with corresponding contact information. Contact information may include phone numbers, addresses and electronic mail (e-mail) addresses. When using typical contact directories, users are required to identify a person by the spelling of the person's name. Some contact directories allow users to perform searches on fields such as the company a person is associated with, the person's name or other information. Because of the crude graphical interface that is often presented to users of typical contact directories, many users have found it difficult to quickly and accurately retrieve contact information.

Therefore, there exists a need in the art for a graphical user interface for a contact directory that allows users to quickly and accurately retrieve contact information.

US5,788,054 discloses a communication terminal apparatus storing access information and video image information corresponding to the access information. The video image information is retrieved and displayed sequentially and/or as a mosaic and in response to a selection of one image by a user, the corresponding access information is retrieved from storage. The order of displaying the images of the video image information may reflect the frequency with which the corresponding access information has been utilised.

US5,923,737 discloses a communication terminal having a display and a graphical user interface for graphically representing the call state of the terminal and other terminals in the system. Incoming, connected and on-hold calls are depicted in different ways using icons and figurines placed in a quasi three-dimensional graphical representation of an office.

### Summary of the Invention

It is an object of the present invention to provide a convenient graphical user interface for a contact directory. It is a further object of the present invention to provide a graphical user interface that includes a mosaic of images wherein the placement of the images conveys information to a user. It is yet another object of the invention to provide a graphical user interface that includes a mosaic of images wherein the relative sizes of the images conveys information to a user.

These and other objects are achieved in a method of representing contacts. The method includes representing a first contact with a first image; representing a second contact with a second image; and generating a mosaic that contains the first and second images, characterised in that generating the mosaic comprises dynamically generating HTML code to create the mosaic; and the relative sizes of the first and second images in the mosaic being a function of the frequency with which a user has contacted the first and second contacts. The first image may be larger than the second image when the user has contacted the first contact more frequently than the user has contacted the second contact. Furthermore, the first image may be placed in front of the second image when the user has contacted the first contact more recently than the user has contacted the second contact.

The method may be used in a computer system having a graphical user interface including a display and a user selection device and may further include displaying the mosaic on the display; receiving a picture selection signal indicative of the user interface selection device selecting one of the first and second contacts; and presenting information relating to the first or the second contact in response to the picture selection signal.

According to the invention there is also provided a device configured to generate a mosaic of images representing contacts, the device comprising: a database of images of people contacted by a user; a database of contact information identifying people contacted by the user and the number of times each person has been contacted by the user; a software module that retrieves images from the database of images and creates a mosaic of images, characterised in that the software module comprises a dynamic HTML code generator for dynamically generating HTML to create the mosaic of images; the database of contact information further being configured to store the elapsed time since the user has contacted each person; and the size and location of the images included in the mosaic of images being functions of the number of times each person has been contacted by the user and the elapsed time since the user has contacted each person.

### BRIEF DESCRIPTION OF DRAWINGS

The invention will be described in detail in the following description of preferred embodiments with reference to the following figures wherein:
FIG. 1 is a graphical user interface for requesting contact information in accordance with an embodiment of the invention;
FIG. 2 is a block diagram of computer system in accordance with an embodiment of the invention;
FIG. 3 illustrates a method of generating a graphical user interface in accordance with an embodiment of the invention;
FIG. 4 is a functional block diagram illustrating how a display may be generated in accordance with an embodiment of the invention; and
FIG. 5 shows HTML code that may be generated by the dynamic HTML generator in accordance with an embodiment of the invention.

### DETAILED DESCRIPTION OF PREFERRED EMBODIMENTS

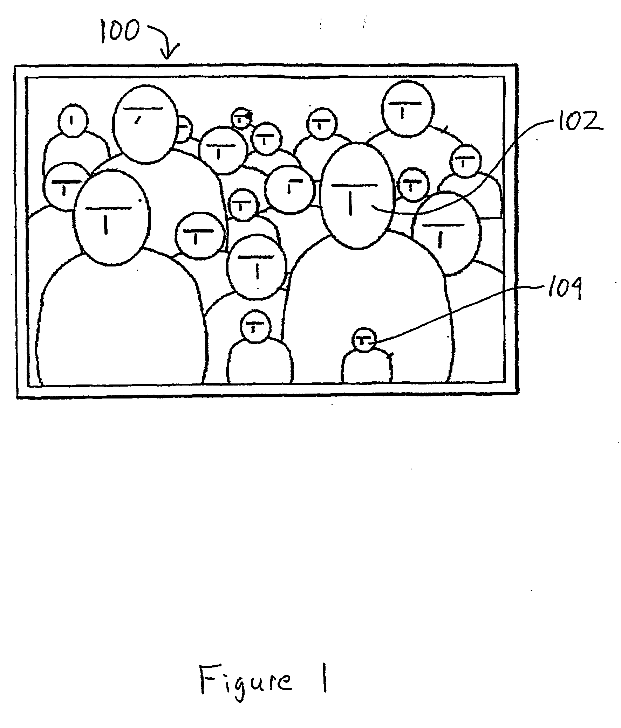

FIG. 1 shows a mosaic graphical user interface 100 that can be used to represent contacts in accordance with an embodiment of the invention. Mosaic 100 may be used to represent elements of an e-mail address book, fax numbers or telephone numbers, or any other contact information. Each contact may be represented with an image. As shown in FIG. 1, mosaic 100 includes images of faces (e.g., photographs) of varying sizes that are placed in a variety of locations.

The relative size of each of the images included in mosaic 100 may be chosen such that the images selected more frequently appear larger than the images selected less frequently. For example, when looking at mosaic 100, the user would realize that image 102 has been selected more frequently than image 104. The relative position of each image may also be used to provide information to the user. For example, images that have been selected more recently may be placed toward the front of mosaic 100.

Mosaic graphical user interface 100 provides many advantages over existing user interfaces that are used to retrieve contact information. One of the advantages is that each contact is represented with an image. The images may be photographs that have been scanned and saved in digital formats such as JPG or GIF. The images may also be digital versions of hand sketches prepared by a user. Alternatively, each contact may be represented by another representation, such as an image template, a written name, initials, a nickname or symbol. Users can typically identify a person from a graphical representation of the person faster than they can identify the same person from a list of names.

Mosaic graphical user interface 100 can be used in conjunction with several software programs. In one embodiment of the invention, each image represents an entry in an e-mail address book. When the user selects an image, an e-mail message addressed to the appropriate person is generated. Designing software that performs functions such as generating e-mail messages after a user makes a selection with a pointing device is well within the skill of a practitioner in the art. In alternative embodiments, information such as the person's address, fax number or telephone number may be displayed after selecting an image.

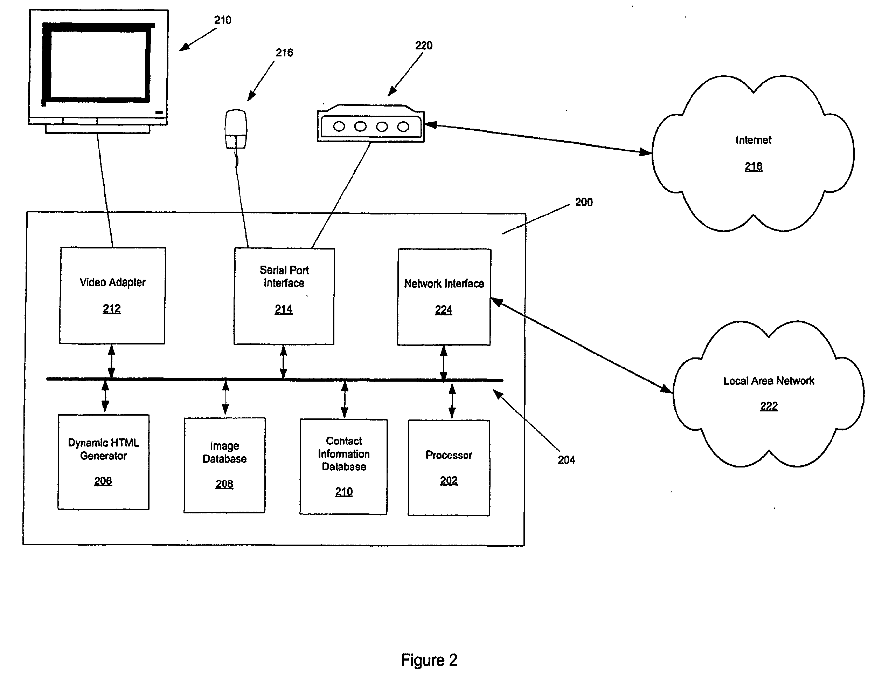

Turning to FIG. 2, a system for generating mosaic 100 (shown in FIG. 1) will be described. One skilled in the art will appreciate that several combinations of hardware and software may be utilized to create mosaics similar to mosaic 100 and that the system shown in FIG. 2 is only one example. The system shown in FIG. 2 includes a computer 200 that includes a central processor unit 202 for controlling the overall operation of the computer. A system bus 204 couples various system components to the central processor unit 202.

A dynamic HTML generator 206 can be used to generate HTML code. The operation of dynamic HTML generator 206 will be described in detail below. An image database 208 may store digital images and a contact information database 210 may store information relating to the contacts made by the user and their relative frequency of use. Computer 200 may also include a video adapter 212 coupling a display device 210 to system bus 204. Display device 210 may include a cathode ray tube (CRT), liquid crystal display (LCD), field emission display (FED), plasma display or any other device that produces an image that is viewable by the user. Furthermore, computer 200 and display device 210 may form part of a mobile terminal, personal digital assistant or any other device that has a directory of contacts.

The images shown in FIG. 1 can be rectangular in shape. Alternatively, the images can be cropped to maximize the number of images that can be included in mosaic 100. In one embodiment, software can be utilized to automatically crop each image to only include the face sections. A user may also manually crop some or all of the images.

A user can select images from the mosaic 100 (shown in FIG. 1) with a variety of input devices. FIG. 2 shows a serial port interface 214 coupling a pointing device 216 to system bus 204. Pointing device 216 may be implemented with a mouse, track ball, pen device, touch sensitive screen, joystick or similar device.

The user can communicate with other users connected to Internet 218 by utilizing a modem 220. Communication can be made with other computers connected a local area network (LAN) 222 via a network interface 224.

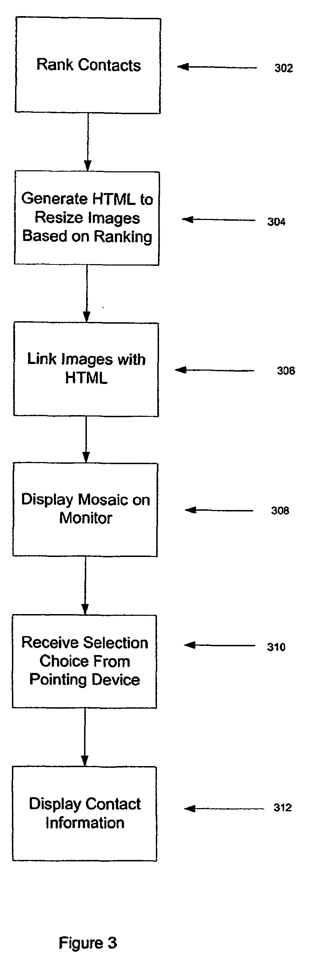

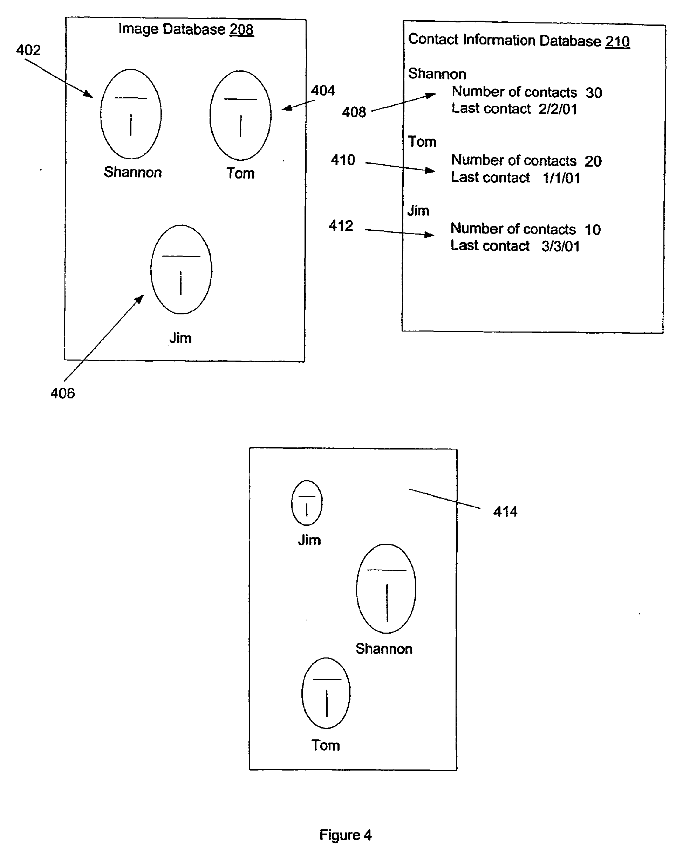

A brief overview of the steps that may be performed when creating a mosaic will now be given with reference to FIG. 3 and then a specific example will be given with reference to FIG. 4. FIG. 3 illustrates the steps that may be performed by HTML generator 206 and one or more of the other elements shown in FIG. 2. In step 302, each contact is ranked. The rankings may be based on variables such as the frequency with which the contact has been selected and the length of time since the contact has been selected. Next, in step 304 HTML generator 206 generates HTML code to create a mosaic. HTML code may reference images representing each one of the contacts and include commands for placing each one of the images in a specific location with a specific size. Images representing the contacts may be stored in a database such as image database 208 (shown in FIG. 2). In step 306, images from image database 208 are linked with the HTML code generated with HTML generator 206. Linking may involve simply locating the images and the HTML code in a common directory. The resulting mosaic is displayed on a display device, such as display device 210 (shown in FIG. 2) in step 308. The user may then position the cursor over one of the images and make a selection choice with a pointing device in step 310. Finally, in step 312 contact information may be displayed to the user. Of course, the display may be in the form of addressing an e-mail message to an appropriate party. Computer-executable instructions for performing the presently disclosed methods may be stored on a computer-readable medium, such as a magnetic or optical disk.

FIG. 4 illustrates a specific example of how the system shown in FIG. 2 may operate. Image database 208 contains images representing Shannon 402, Tom 404, and Jim 406. In one embodiment of the invention, the images are JPG files that have been cropped as described above. Contact information database 210 contains information relating to the contacts made by the user to Shannon, Tom, and Jim. In the example shown in FIG. 4, sending an e-mail message to one of the parties may be considered to be making a contact. Entry 408 shows that the user has contacted Shannon thirty times and has last contacted her on 2/2/01. Entries 410 and 412 show the contact information for contacts made with Tom and Jim respectively.

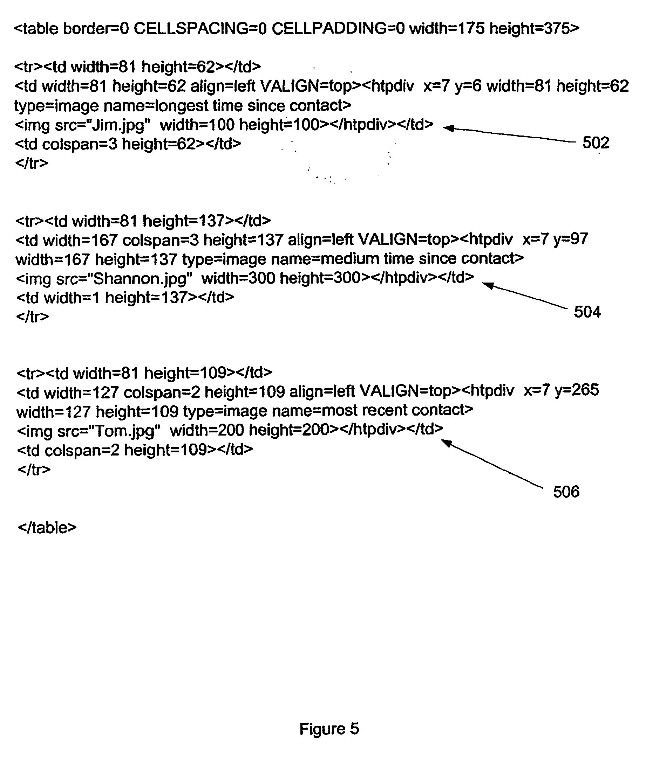

Dynamic HTML generator 206 (shown in FIG. 2) may then use the information contained in image database 208 and contact information database 210 to create HTML code that will result in an appropriate mosaic 414. Utilizing the information shown in FIG. 4, dynamic HTML generator 206 may generate HTML code that includes segments similar to the code segments shown in FIG. 5. The code segments shown place JPG images at appropriate places within a table. Line 502 includes commands for setting that width and height of image file Jimjpg. Lines 504 and 506 include commands for setting the width and height of image files Shannon.jpg and Tom.jpg, respectively.

There are number of ways that dynamic HTML generator 206 can size images. In one embodiment, each image has a unique size. In an alternative embodiment, a specific group of sizes is created and each image is assigned to one of the assigned sizes. For example, a first size could correspond to less than 10 contacts, a second size could correspond to between 10 and 25 contacts and a final size could correspond to more than 25 contacts. Each image would have one of the three sizes. Of course, the size of each image may be a function of the relative number of contacts to prevent all or several images from being the same size after a predetermined number of contacts.

Mosaic 414 (shown in FIG. 4) is a mosaic that may result from the HTML code segments shown in FIG. 5. Contact information database 210 shows that the user has contacted Jim the fewest number of times. Accordingly, the image of Jim included in mosaic 414 has the smallest size. Furthermore, contact information database 210 shows that the user has most frequently contacted Shannon. This information is conveyed to the user by mosaic 414 including an image of Shannon that is larger than the other images.

Having described preferred embodiments of a novel contact directory (which are intended to be illustrative and not limiting), it is noted that modifications and variations can be made by persons skilled in the art. It is therefore to be understood that changes may be made in the particular embodiments of the invention disclosed which are within the scope of the invention as defined by the appended claims.

Having thus described the invention with the details and particularity required by the patent laws, what is claimed and desired protected by Letters Patent is set forth in the appended claims.

## Claims

1. A method of representing contacts in an electronic communication system, the method comprising:
representing a first contact with a first image (102);
representing a second contact with a second image (104); and
generating a mosaic (100) that contains the first and second images,
**characterised in that**
generating the mosaic comprises dynamically generating HTML code to create the mosaic; and
the relative sizes of the first and second images (102, 104) in the mosaic (100) are a function of the frequency with which a user has contacted the first and second contacts.

2. The method of claim 1, wherein the first image (102) is larger than the second image (104) when the user has contacted the first contact more frequently than the user has contacted the second contact.

3. The method of claim 1, wherein generating said mosaic (100) further includes placing the first and second images (102, 104) in locations that are functions of the elapsed times since the user has contacted the first and second contacts.

4. The method of claim 3, wherein the first image is placed in front of the second image when the user has contacted the first contact more recently than the user has contacted the second contact.

5. The method of any one of the preceding claims, further comprising:
in response to the user selecting one of the first and second images (102, 104), generating an electronic mail message addressed to the first or second contact.

6. The method of any one of the preceding claims, being used in a computer system having a graphical user interface including a display (210) and a user selection device (216), the method further comprising:
displaying the mosaic (100) on the display (308);
receiving a picture selection signal indicative of the user interface selection device selecting one of the first and the second contacts (310); and
presenting information relating to the first or the second contact in response to receiving the picture selection signal (312).

7. A computer-readable medium comprising computer-executable instructions which, when executed by a processor (202), causes the processor to perform the method of any one of the preceding claims.

8. A device configured to generate a mosaic (100) of images representing contacts, the device comprising:
a database of images (208) of people contacted by a user;
a database of contact information (210) identifying people contacted by the user and the number of times each person has been contacted by the user
a software module (206) that retrieves images from the database of images and creates a mosaic (100) of images,
**characterised in that**
the software module comprises a dynamic HTML code generator for dynamically generating HTML to create the mosaic of images;
the database of contact information (210) is further configured to store the elapsed time since the user has contacted each person; and
the size and location of the images included in the mosaic of images are functions of the number of times each person has been contacted by the user and the elapsed time since the user has contacted each person.

9. A device according to claim 8 comprising a computer or a mobile terminal.

## Patentansprüche

1. Verfahren zur Darstellung von Kontakten in einem elektronischen Kommunikationssystem, wobei das Verfahren umfasst:
- Darstellen eines ersten Kontakts mit einem ersten Bild (102);
- Darstellen eines zweiten Kontakts mit einem zweiten Bild (104); und
- Erzeugen eines Mosaiks (100), welches das erste und das zweite Bild enthält;
**dadurch gekennzeichnet, dass**
- das Erzeugen des Mosaiks ein dynamisches Erzeugen von HTML-Code umfasst, um das Mosaik zu erzeugen; und
- die relativen Größen des ersten und des zweiten Bilds (102, 104) in dem Mosaik (100) eine Funktion der Häufigkeit sind, mit der ein Benutzer den ersten und den zweiten Kontakt kontaktiert hat.

2. Verfahren nach Anspruch 1, wobei das erste Bild (102) größer ist als das zweite Bild (104), wenn der Benutzer den ersten Kontakt häufiger kontaktiert hat als der Benutzer den zweiten Kontakt kontaktiert hat.

3. Verfahren nach Anspruch 1, wobei das Erzeugen des Mosaiks (100) weiter einschließt, das erste und das zweite Bild (102, 104) an Stellen zu platzieren, die Funktionen der verstrichenen Zeiten sind, seit der Benutzer den ersten und den zweiten Kontakt kontaktiert hat.

4. Verfahren nach Anspruch 3, wobei das erste Bild vor dem zweiten Bild platziert wird, wenn der Benutzer den ersten Kontakt häufiger kontaktiert hat als der Benutzer den zweiten Kontakt kontaktiert hat.

5. Verfahren nach irgendeinem der vorhergehenden Ansprüche, weiter umfassend
- Erzeugen einer elektronischen Postnachricht, die an den ersten oder zweiten Kontakt adressiert ist, in Reaktion darauf, dass der Benutzer das erste oder das zweite Bild (102, 104) auswählt.

6. Verfahren nach irgendeinem der vorhergehenden Ansprüche, verwendet in einem Computersystem mit einer grafischen Benutzerschnittstelle, die eine Anzeigeeinrichtung (210) und eine Benutzer-Auswahlvorrichtung (216) einschließt, wobei das Verfahren weiter umfasst:
- Anzeigen (308) des Mosaiks (100) auf der Anzeigeeinrichtung;
- Empfangen (310) eines Bild-Auswahlsignals, das angibt, dass die Benutzerschnittstellen-Auswahlvorrichtung den ersten oder den zweiten Kontakt auswählt; und
- Präsentieren (312) von Informationen, die sich auf den ersten oder den zweiten Kontakt beziehen, in Reaktion auf den Empfang des Bild-Auswahlsignals.

7. Computer-lesbares Medium, umfassend computerausführbare Anweisungen, die wenn sie durch einen Prozessor (202) ausgeführt werden, den Prozessor dazu veranlassen, das Verfahren nach irgendeinem der vorhergehenden Ansprüche auszuführen.

8. Vorrichtung, konfiguriert zum Erzeugen eines Mosaiks (100) von Bildern, die Kontakte darstellen, wobei die Vorrichtung umfasst:
- eine Datenbank (208) von Bildern von Personen, die von einem Benutzer kontaktiert wurden;
- eine Datenbank (210) von Kontaktinformationen, die Personen, die von dem Benutzer kontaktiert wurden, und die Anzahl von Malen identifizieren, die jede Person von dem Benutzer kontaktiert wurde;
- ein Softwaremodul (206), das Bilder aus der Bilder-Datenbank abruft und ein Mosaik (100) von Bildern erzeugt;
**dadurch gekennzeichnet, dass**
- das Softwaremodul einen Codegenerator für dynamischen HTML-Code umfasst, um dynamisch HTML zu erzeugen, um das Mosaik von Bildern zu erzeugen;
- die Kontaktinformations-Datenbank (210) weiter konfiguriert ist zum Speichern der verstrichenen Zeit seit der Benutzer jede Person kontaktiert hat; und
- die Größe und Stelle der Bilder, die in dem Bilder-Mosaik enthalten sind, Funktionen der Anzahl von Malen, die jede Person von dem Benutzer kontaktiert wurde, und der verstrichenen Zeit sind, seit der Benutzer jede Person kontaktiert hat.

9. Vorrichtung nach Anspruch 8, umfassend einen Computer oder ein mobiles Endgerät.

## Revendications

1. Procédé de représentation de contacts dans un système de communication électronique, le procédé comprenant les étapes consistant à :
représenter un premier contact avec une première image (102) ;
représenter un second contact avec une seconde image (104) ; et
générer une mosaïque (100) contenant les première et seconde images,
**caractérisé en ce que**
la génération de la mosaïque comprend la génération dynamique d'un code HTML afin de créer la mosaïque ; et
les tailles relatives des première et seconde images (102, 104) dans la mosaïque (100) dépendent de la fréquence à laquelle un utilisateur a contacté les premier et second contacts.

2. Procédé selon la revendication 1 dans lequel la première image (102) est plus grande que la seconde image (104) lorsque l'utilisateur a contacté le premier contact plus fréquemment que le second contact.

3. Procédé selon la revendication 1 dans lequel la génération de ladite mosaïque (100) comprend en outre le placement des première et seconde images (102, 104) dans des emplacements qui dépendent des temps écoulés depuis que l'utilisateur a contacté les premier et second contacts.

4. Procédé selon la revendication 3 dans lequel la première image est placée devant la seconde image lorsque l'utilisateur a contacté le premier contact plus récemment que le second contact.

5. Procédé selon l'une quelconque des revendications précédentes comprenant en outre :
en réponse à la sélection par l'utilisateur de l'une des première et seconde images (102, 104), la génération d'un message de courrier électronique adressé au premier ou au second contact.

6. Procédé selon l'une quelconque des revendications précédentes, utilisé dans un système informatique possédant une interface utilisateur graphique comprenant un écran (210) et un dispositif de sélection des utilisateurs (216), le procédé comprenant en outre les étapes consistant à :
afficher la mosaïque (100) sur l'écran (308) ;
recevoir un signal de sélection d'image indiquant le dispositif de sélection de l'interface utilisateur qui sélectionne l'un des premier et second contacts (310) ; et
présenter des informations concernant le premier ou le second contact en réponse à la réception du signal de sélection d'image (312).

7. Support lisible par ordinateur comprenant des instructions pouvant être exécutées par l'ordinateur qui, lors de l'exécution par un processeur (202), permet au processeur d'exécuter le procédé selon l'une quelconque des revendications précédentes.

8. Dispositif configuré pour générer une mosaïque (100) d'images représentant des contacts, le dispositif comprenant :
une base de données d'images (208) des personnes contactées par un utilisateur ;
une base de données des informations de contact (210) identifiant les personnes contactées par l'utilisateur ainsi que le nombre de fois que chaque personne a été contactée par l'utilisateur ;
un module de logiciel (206) permettant de récupérer des images de la base de données d'images et de créer une mosaïque (100) d'images,
**caractérisé en ce que**
le module de logiciel comprend un générateur de code HTML dynamique permettant de générer dynamiquement un code HTML afin de créer la mosaïque d'images ;
la base de données des informations de contact (210) est en outre configurée pour stocker le temps écoulé depuis que l'utilisateur a contacté chaque personne ; et
la taille et l'emplacement des images comprises dans la mosaïque d'images dépendent du nombre de fois que chaque personne a été contactée par l'utilisateur et du temps écoulé depuis que l'utilisateur a contacté chaque personne.

9. Dispositif selon la revendication 8 comprenant un ordinateur ou un terminal mobile.
